# EUROPÄISCHE PATENTSCHRIFT

(11) **EP 2 984 715 B1**
(45) Veröffentlichungstag und Bekanntmachung des Hinweises auf die Patenterteilung: **10.06.2020**
(21) Anmeldenummer: 14713116.3
(22) Anmeldetag: 27.03.2014
(51) Int. Cl.: H01T 1/14, H01C 7/12, H01H 37/76, H02H 9/06

(54) **ANORDNUNG ZUM ÜBERLASTSCHUTZ VON ÜBERSPANNUNGSSCHUTZGERÄTEN**
ARRANGEMENT FOR OVERLOAD PROTECTION FOR OVERVOLTAGE PROTECTION EQUIPMENT
ENSEMBLE DESTINÉ À PROTÉGER CONTRE UNE SURCHARGE DES APPAREILS DE PROTECTION CONTRE DES SURTENSIONS

(30) Priorität: 11.04.2013 DE 102013006233; 18.11.2013 DE 102013019391
(43) Veröffentlichungstag der Anmeldung: 17.02.2016
(73) Patentinhaber: DEHN SE + Co KG, 92318 Neumarkt / Opf. (DE)
(72) Erfinder: STRANGFELD, Uwe, 90429 Nürnberg (DE); KRAUSS, Bernhard, 92348 Berg (DE); WAFFLER, Michael, 92318 Neumarkt (DE); HIERL, Stephan, 92318 Neumarkt (DE)
(74) Vertreter: Kruspig, Volkmar
(86) Internationale Anmeldenummer: PCT/EP2014/056161
(87) Internationale Veröffentlichungsnummer: WO 2014/166751

(56) Entgegenhaltungen:
- EP-A2- 1 376 811
- DE-A1- 3 111 096
- DE-A1-102008 013 447
- DE-A1-102008 022 794
- DE-C1- 19 545 505
- US-A1- 2009 128 978

## Beschreibung

Die Erfindung betrifft eine Anordnung zum Überlastschutz von Überspannungsschutzgeräten.

Es ist bekannt, Überspannungsschutzgeräte in elektrischen Anlagen zum Schutz vor unzulässig hohen Spannungen einzusetzen. Üblicherweise weisen Überspannungsschutzgeräte spannungsschaltende und spannungsbegrenzende Elemente auf, um die gewünschten elektrischen Funktionen zu erfüllen.

Aber auch Blitz- oder Überspannungsschutzgeräte selbst müssen vor möglicher Überlastung, z.B. aus transienten Vorgängen, wie Blitzüberspannungen oder Schaltüberspannungen, aber auch aus sogenannten temporären betriebsfrequenten Überspannungen (TOV) geschützt werden. Hier können externe oder interne Vorsicherungen eingesetzt werden.

Wenn spannungsbegrenzende Schutzkomponenten, z.B. Metalloxidvaristoren, zum Einsatz kommen, ist ein direkter Schutz erforderlich, da im Fall einer Schädigung der spannungsbegrenzenden Schutzkomponente sich diese nicht nur auf räumlich benachbarte Bauteile des Überspannungsschutzgeräts auswirkt, sondern auch die Gefahr einer Komplettzerstörung des Geräts und entsprechender Peripherie besteht.

Aus der DE 10 2008 022 794 A1 ist ein elektrisches Schutzelement mit Kurzschlusseinrichtung vorbekannt, das aus einem gasgefüllten Überspannungsableiter mit zwei oder drei Elektroden besteht. An den Enden des Überspannungsableiters ist jeweils eine der Elektroden befindlich. Zusätzlich weist das Schutzelement eine thermische Kurzschlusseinrichtung auf. Diese umfasst einen Clip, der wenigstens zwei Abschnitte besitzt. Ein erster Abschnitt des Clips ist auf den Überspannungsableiter aufgeschnappt. Ein zweiter Abschnitt umgibt den ersten Abschnitt wenigstens teilweise und ist über ein Schmelzelement vom ersten Abschnitt beabstandet. Der zweite Abschnitt weist wiederum an einem Ende einen Kurzschlussbügel auf. Dieser Kurzschlussbügel verbindet die vorerwähnten Elektroden des Überspannungsableiters im Falle des Schmelzens des Schmelzelements elektrisch.

Bei einer weiteren Ausführungsform weist der Überspannungsableiter drei Elektroden auf und ist als keramischer Hohlkörper ausgeführt. Die dritte Elektrode separiert hier den Hohlkörper in zwei Teile. Die mittlere Elektrode ragt durch die vorerwähnte Aussparung derart, dass selbige einen direkten Kontakt zum Schmelzelement aufweist.

Das Schmelzelement ist vorzugsweise derart angeordnet, dass der Kurzschlussbügel von den Außenelektroden durch das Schmelzelement beabstandet ist. Im Falle des Schmelzens des Schmelzelements drückt der Clip auf die Außenelektroden des Überspannungsableiters und verbindet diese miteinander. Wenn ein Überspannungsableiter mit einer zusätzlichen mittleren Elektrode vorhanden ist, verbindet der Kurzschlussbügel die Außenelektroden mit der mittleren Elektrode.

Mit der vorbekannten Lösung lässt sich zwar der dort vorhandene Überspannungsableiter selbst vor Überlast schützen, der Schutz von spannungsbegrenzenden Elementen innerhalb eines mehrere Baugruppen aufweisenden Überspannungsschutzgeräts ist jedoch nicht ohne weiteres realisierbar.

Die US 2009/128978 A1 offenbart eine Anordnung, die zum Überlastschutz in Überspannungsschutzgeräten geeignet ist. Diese bekannte Anordnung weist mindestens ein spannungsbegrenzendes Element sowie mindestens ein spannungsschaltendes Element auf. Wahlweise ist eine Vorsicherung vorhanden. Das spannungsbegrenzende Element ist als Varistor und das spannungsschaltende Element als Funkenstrecke ausgebildet. Die betreffenden Elemente sind in Reihe geschaltet. Zum Schutz des spannungsbegrenzenden Elementes ist in dieser Reihenschaltung eine Überwachungsfunkenstrecke oder ein Überwachungsgasableiter, einen Bypass bildend, parallel geschalten. Darüber hinaus ist eine Überwachungseinrichtung vorgesehen, die bei Alterungseffekten oder dergleichen entweder nur die Überwachungsfunkenstrecke bzw. den Überwachungsgasableiter oder aber die Überwachungsfunkenstrecke bzw. den Überwachungsgasableiter und das spannungsschaltende Element überbrückt.

Aus dem Vorgenannten ist es daher Aufgabe der Erfindung, eine weiterentwickelte Anordnung zum Überlastschutz von Überspannungsschutzgeräten anzugeben. Die Überspannungsschutzgeräte weisen mindestens ein spannungsbegrenzendes Element sowie mindestens ein spannungsschaltendes Element auf und sind wahlweise mit einer Vorsicherung versehen oder stehen mit dieser in Verbindung. Das spannungsbegrenzende Element ist als Varistor (MOV) und das spannungsschaltende Element als Funkenstrecke oder Gasableiter (GDT) ausgebildet. Die erstgenannten Elemente sind mit der Vorsicherung in Reihe geschaltet.

Aufgabengemäß soll der Schutz aller Komponenten wie vorerwähnt realisiert werden und eine Abschaltung des Überspannungsschutzgeräts bei Überlastung möglich sein. Dabei soll die Anordnung vor Überlastung mit hohen Impulsströmen schützen, aber auch einen Schutz bei unzulässig starker Erwärmung der überspannungsbegrenzenden Elemente gewährleisten.

Die Lösung der Aufgabe der Erfindung erfolgt durch eine Anordnung gemäß der Merkmalskombination nach Patentanspruch 1, wobei die Unteransprüche zweckmäßige Ausgestaltungen und Weiterbildungen umfassen.

Es wird demnach von einer Anordnung zum Überlastschutz von Überspannungsschutzgeräten ausgegangen, welche mindestens ein spannungsbegrenzendes Element sowie mindestens ein spannungsschaltendes Element aufweisen und die ergänzend eine Vorsicherung besitzen kann. Das spannungsbegrenzende Element ist als Varistor und das spannungsschaltende Element als Funkenstrecke bzw. Gasentladungsableiter ausgebildet. Die vorerwähnten Elemente sind in Reihe geschaltet.

Zum Schutz vor unzulässigen Impulsströmen ist dem spannungsbegrenzenden Element in der Reihenschaltung eine Überwachungsfunkenstrecke, einen Bypass bildend, parallel geschalten.

Weiterhin ist eine thermische Überwachungseinrichtung vorgesehen, welche bei Alterungseffekten, unzulässig hohen Netzspannzungen und/oder energiearmen, periodischen, hochfrequenten Überspannungen sowohl die Überwachungsfunkenstrecke als auch das spannungsschaltende Element überbrückt, um zum Schutz der Bauelemente die Vorsicherung auszulösen.

Erfindungsgemäß ist die thermische Überwachungseinrichtung baulich mit der Funkenstrecke verbunden und verfügt über einen Kontakt, welcher die Reihenschaltung aus Überwachungsfunkenstrecke und Funkenstrecke des spannungsschaltenden Elements kurzschließt.

Bei einer bevorzugten Ausgestaltung ist die erfindungsgemäße Anordnung auf einem Verdrahtungsträger, z.B. einer Leiterplatte ausgebildet, wobei der Verdrahtungsträger das spannungsbegrenzende sowie das spannungsschaltende Element, die Vorsicherung, die Überwachungsfunkenstrecke und die thermische Überwachungseinrichtung aufnimmt.

Das spannungsschaltende Element kann, wie bereits erwähnt, als Gasableiter werden. Bei einer wiederum bevorzugten Ausgestaltung der Erfindung ist die thermische Überwachungseinrichtung als Lotformteil ausgebildet, welches in wärmeübertragender Nähe zum Gasableiter befindlich ist, wobei ein federkraftbeaufschlagter Bügel, vom schmelzenden Formteil freigegeben, die Überwachungsfunktion auslöst oder bewirkt.

Bei einer diesbezüglich alternativen Lösung kann am Gasableiter und dessen Lotbefestigung auf dem Verdrahtungsträger ein Schieber angreifen, welcher beim Aufschmelzen der Lotbefestigung die Überbrückungsfunktion auslöst oder bewirkt.

Der Schieber kann ebenfalls mit einer Vorspannkraft in Richtung Lotbefestigung beaufschlagt werden, was beispielsweise mittels einer Feder realisierbar ist.

Bei einer wiederum bevorzugten Ausgestaltung ist eine Schlingfeder vorgesehen, welche die gewünschte Vorspannkraft erzeugt und gleichzeitig einen leitfähigen Teil der Überbrückung darstellt.

Diesbezüglich weist die Schlingfeder zwei Federenden und einen Schlingkörper auf, wobei sich ein erstes Federende am Verdrahtungsträger und ein zweites Federende am Lotformteil oder am Schieber abstützt.

Der Schlingkörper ist an der Vorsicherung fixiert und steht mit dieser in elektrisch leitendem Kontakt. Bevorzugt können die Abmessungen der Schlingfeder so ausgeführt werden, dass sie einen Mantelabschnitt der Vorsicherung umfangmäßig umgreift, wobei in diesem Fall von einer zylindrischen Ausbildung der Vorsicherung ausgegangen wird.

Diesbezüglich ist es möglich, auf engstem Bauraum des Verdrahtungsträgers in unmittelbarer Nähe des spannungsbegrenzenden, des spannungsschaltenden und des Sicherungselements die notwendigen Funktionen zu realisieren, ohne dass zusätzlicher Bauraum benötigt wird.

Die Erfindung soll nachstehend anhand eines Ausführungsbeispiels sowie von Figuren näher erläutert werden.

Hierbei zeigen:
- Fig. 1a, 1b: Prinzipschaltbilder der Anordnung zum Überlastschutz von Überspannungsschutzgeräten mit geschobenem oder gezogenem Kurzschlussbügel;
- Fig. 2a, 2b: Prinzipschaltbilder der Ausbildung der Überwachungseinrichtung mit einem Element, welches in eine Kurzschlussposition gezogen oder geschoben wird, und
- Fig. 3a: bis c perspektivische Abbildungen der erfindungsgemäßen Anordnung auf einer Leiterplatte innerhalb eines Überspannungsschutzgeräts realisiert, wobei zur besseren Erkennbarkeit Teile des Außengehäuses weggebrochen sind.

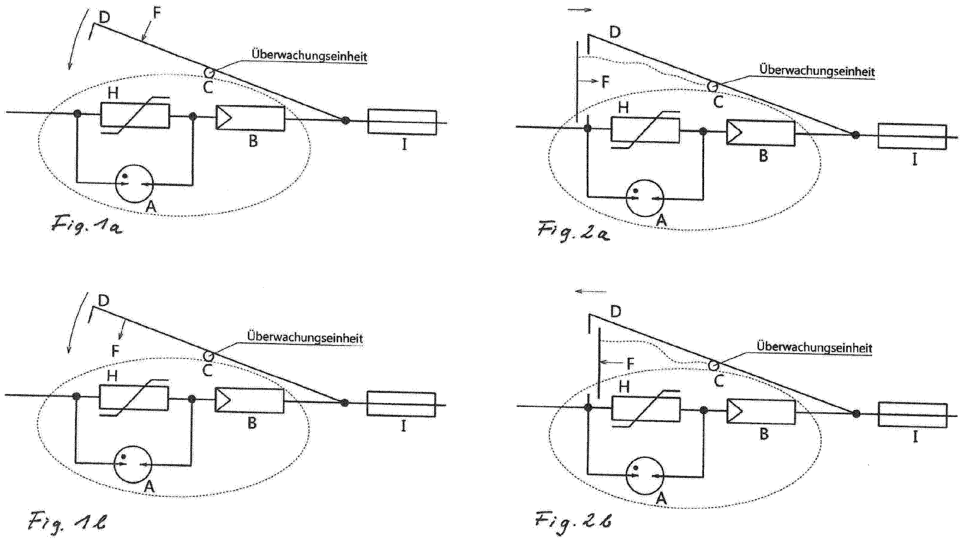

Bei der Darstellung nach Fig. 1a, b und 2a, b wird zunächst von einem spannungsbegrenzenden Element H, ausgebildet als Varistor, ausgegangen, der Bestandteil des Überspannungsschutzgeräts ist. Diesem Varistor H ist eine klassische Ableitfunkenstrecke B in Reihe geschaltet. Die Reihenschaltung umfasst weiterhin eine Vorsicherung I.

Erfindungsgemäß wird dem Varistor H eine Überwachungsfunkenstrecke parallel geschaltet, welche dem Schutz des Varistors vor Zerstörung durch hohe Impulsströme dient. Übersteigt die am Varistor H abfallende Spannung die Ansprechspannung der Überwachungsfunkenstrecke, wird diese gezündet. Der Strom fließt dann über den gebildeten Bypass und es wird der Varistor H entlastet.

Um weiterhin Schäden aus Alterungseffekten der Bauteile oder bedingt durch unzulässig hohe Netzspannungen, resultierend aus Fehlern in übergeordneten Spannungssystemen bzw. energiearmen, periodischen und hochfrequenten Überspannungen, die meist bei Umrichtvorgängen entstehen, vorzubeugen, wird, wie prinzipiell dargestellt, ein Bauteil des Überspannungsschutzgeräts, z.B. die Funkenstrecke B, mit einer Überwachungseinrichtung C versehen.

Wird die diesbezüglich vorgesehene Grenztemperatur erreicht, kann ein z.B. unter Federkraft stehender Kurzschlussbügel D die äußeren Elektroden der Funkenstrecken A und B kurzschließen und somit eine drohende Zerstörung des Varistors H und der Funkenstrecke B durch Überlastung vermeiden. Durch den eingeleiteten niederohmigen Kurzschluss wird also die Möglichkeit geschaffen, dass die vorgeschlagene Sicherung I auslösen kann.

Eine thermische Überwachung der Funkenstrecke B bietet sich aus mehreren Gründen an. Zum einen ergibt sich eine einfache und kompakte Möglichkeit der konstruktiven Umsetzung, so dass die Verwendung kleinster Standard-Bauelemente möglich wird. Die Reihenschaltung von Funkenstrecken kann in kompakter Bauform erfolgen, so dass die Kurzschlusseinrichtung D direkt auf einer diesbezüglichen Baugruppe angeordnet werden kann, so dass quasi ein einziges kompaktes Bauelement zur diesbezüglichen Weiterverarbeitung zur Verfügung steht.

Wenn die Überwachungsfunkenstrecke aufgrund eines zu hohen Spannungsabfalls an parallelen Komponenten gezündet wurde, fließt der Strom durch die vorgeschaltete Sicherung I und die Funkenstrecken A und B. Aufgrund der einzelnen Lichtbögen in den Funkenstrecken kann die auftretende Gegenspannung so groß werden, dass der fließende Strom durch die Reihenschaltung I + B + H nicht ausreichend ist, um die Sicherung I auszulösen. In diesem Fall erwärmt der fließende Strom die Funkenstrecke B und damit die thermische Überwachungseinrichtung bzw. die Kurzschlusseinrichtung, bestehend aus thermischer Überwachungseinrichtung C und Kurzschlussbügel D, so dass die in den Funkenstrecken abfallende Spannung überbrückt wird.

Gemäß der Fig. 1a wird durch eine Kraft F die Kurzschlusseinrichtung D, ausgeführt als Kurzschlussbügel, in die Kurzschlussposition geschoben. Die Prinzipdarstellung nach Fig. 1b lässt erkennen, dass der Kurzschlussbügel D durch eine Kraft F nach Auslösen der Überwachungseinheit in die Kurzschlussposition gezogen wird. Bezüglich des Schiebens oder Ziehens des Kurzschlussbügels in die Kurzschlussposition ist die Pfeildarstellung am F signifikant.

Nach der Fig. 2a wird nach Auslösen der Überwachungseinrichtung durch die Kraft F ein kurzschließendes Element in die Kurzschlussposition hineinbewegt, und zwar bevorzugt gezogen. Auch diesbezüglich die Pfeildarstellung am F maßgeblich.

Gemäß der Fig.2b wird nach Auslösen der Überwachungseinrichtung durch die Kraft F ein kurzschließendes Element in die Kurzschlussposition hineinbewegt, insbesondere geschoben, was wiederum durch die Pfeildarstellung symbolisiert ist.

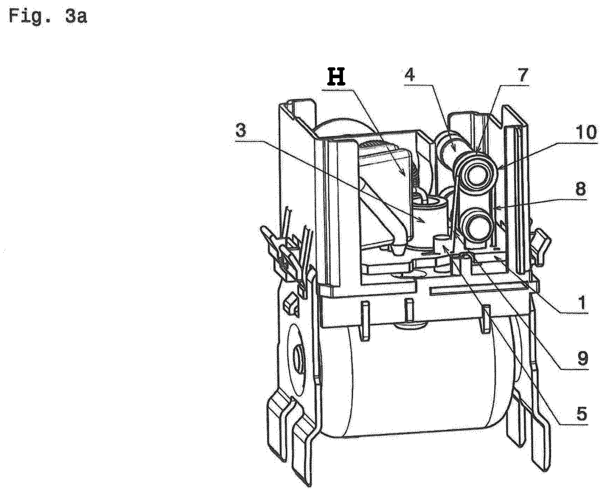

Verschiedene konstruktive Umsetzungsmöglichkeiten der erfindungsgemäßen Lehre sind in den Fig. 3a bis 3c illustriert.

Gemäß Fig. 3a ist ein Lotformteil 5 vorhanden, das sich in unmittelbarer Nähe eines thermisch überwachten Gasableiters 3 befindet.

Wird aufgrund von Überspannungen der Gasableiter 3 unzulässig erwärmt, schmilzt das Lotformteil 5. Hierdurch kann sich der Schenkel einer Schlingfeder 7, wie in der Figur gezeigt, auf einen links vom Lotformteil 5 befindlichen Kontaktstift zu bewegen und einen Kurzschluss erzeugen. Der dann fließende Strom löst die Vorsicherung 4, an der die Schlingfeder 7 fixiert ist, aus.

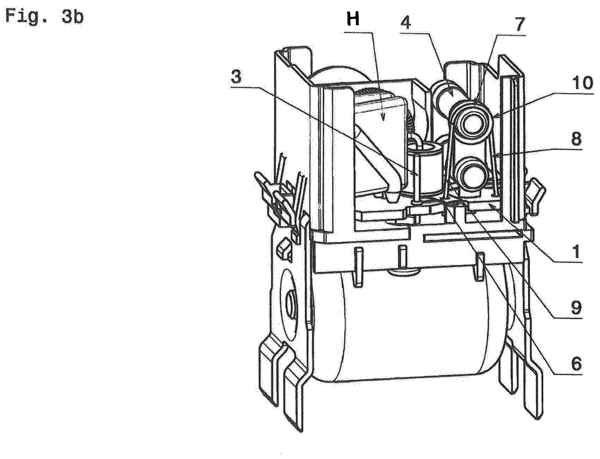

Bei der Lösungsmöglichkeit nach Fig. 3b ist ein Schieber 6 im Bereich der Lotbefestigung des Gasableiters 3 vorhanden, der sich in der Ebene des Verdrahtungsträgers 1 bzw. der Leiterplatte verschieben kann.

Wenn bei unzulässig starker Erwärmung die Lötstelle des Gasableiters 3 zu schmelzen beginnt, bewegt sich der Schieber 6, wiederum unterstützt durch die Kraft der Schlingfeder 7, zum Kontaktstift (links im Bild), so dass ein gewünschter Kurzschluss resultiert und die Vorsicherung auslösbar ist.

Die Schlingfeder 7 kann wie in den Figuren 3a und 3b gezeigt, zwei Federenden 8 und 9 aufweisen, wobei ein erstes Federende 8 am Verdrahtungsträger 1 und ein zweites Federende 9 am Lotformteil 5 oder am Schieber 6 angreift bzw. sich dort abstützt und der Schlingkörper 10 der Schlingfeder 7 an der Vorsicherung 4 fixiert ist und mit dieser in elektrischem Kontakt steht.

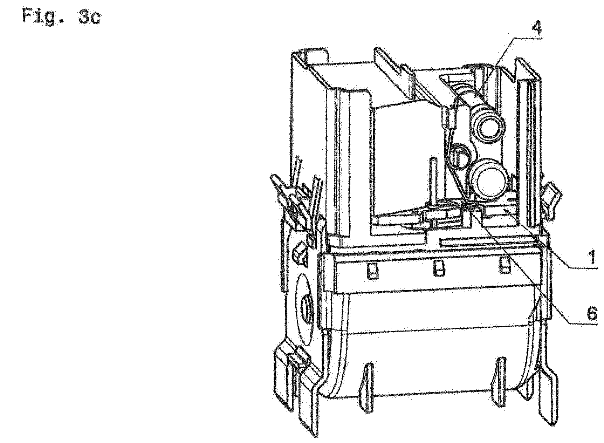

Bei den vorstehend erläuterten Lösungsmöglichkeiten nach den Fig. 3a und 3b übernimmt die Schlingfeder 7 eine elektrische Funktion der Überbrückungseinrichtung. Diese elektrische Funktion kann aber auch, wie in der Fig. 3c dargestellt, durch eine leitfähige Ausführung des Schiebers 6 realisiert werden. In diesem Fall ist die Schlingfeder 7 nicht an der Sicherung 4, sondern an einem Gehäusefortsatz fixierbar.

## Patentansprüche

1. Anordnung zum Überlastschutz von Überspannungsschutzgeräten, besagte Anordnung umfasst mindestens ein spannungsbegrenzendes Element (H) sowie mindestens ein spannungsschaltendes Element (B), sowie wahlweise eine Vorsicherung (I), wobei das spannungsbegrenzende Element als Varistor (H) und das spannungsschaltende Element als Funkenstrecke (B) ausgebildet ist und diese Elemente in Reihe geschaltet sind, wobei
zum Schutz des spannungsbegrenzenden Elements (H) in der Reihenschaltung eine Überwachungsfunkenstrecke oder ein Überwachungsgasableiter (A), einen Bypass bildend, parallel geschaltet ist und weiterhin eine thermische Überwachungseinrichtung (C) vorgesehen ist, welche bei Alterungseffekten, unzulässig hohen Netzspannungen und/oder energiearmen, periodischen, hochfrequenten Überspannungen, welche in Anhängigkeit von der Gegenspannung der spannungsschaltenden Elemente die Überwachungsfunkenstrecke oder den Überwachungsgasableiter (A) und die Funkenstrecke (B) überbrückt,
wobei die Überwachungseinrichtung (C) baulich mit der Funkenstrecke (B) verbunden ist und über einen Kontakt (D) verfügt, welcher die Reihenschaltung aus Überwachungsfunkenstrecke oder Überwachungsgasableiter (A) und der Funkenstrecke (B) als spannungsschaltendem Element (B) beim Überbrücken kurzschließt.

2. Anordnung nach Anspruch 1,
**dadurch gekennzeichnet, dass**
die wahlweise vorgesehene Vorsicherung (I) mit dem spannungsschaltenden Element (B) und dem spannungsbegrenzenden Element (H) in Reihe geschaltet ist.

3. Anordnung nach Anspruch 2,
**dadurch gekennzeichnet, dass**
bei der Überbrückung zum Schutz der Bauelemente die Vorsicherung (I) ausgelöst wird.

4. Anordnung nach Anspruch 1,
**dadurch gekennzeichnet, dass**
diese auf einem Verdrahtungsträger (1) ausgebildet ist, welcher das spannungsbegrenzende (H) und das spannungsschaltende Element (B), die wahlweise Vorsicherung (I), die Überwachungsfunkenstrecke und die Überwachungseinrichtung aufnimmt.

5. Anordnung nach Anspruch 4,
**dadurch gekennzeichnet, dass**
das spannungsschaltende Element (B) als Gasableiter (3) ausgebildet ist.

6. Anordnung nach Anspruch 5,
**dadurch gekennzeichnet, dass**
die thermische Überwachungseinrichtung ein Lotformteil (5) ist, welches in wärmeübertragender Nähe des Gasableiters (3) befindlich ist, wobei ein federkraftbeaufschlagter Bügel, vom schmelzenden Formteil (5) freigegeben, die Überbrückungsfunktion auslöst oder bewirkt.

7. Anordnung nach Anspruch 5,
**dadurch gekennzeichnet, dass**
am Gasableiter (3) und dessen Lotbefestigung auf dem Verdrahtungsträger (1) ein Schieber (6) angreift, welcher beim Aufschmelzen der Lotbefestigung die Überbrückungsfunktion auslöst oder bewirkt.

8. Anordnung nach Anspruch 7,
**dadurch gekennzeichnet, dass**
der Schieber (6) mit einer Vorspannkraft in Richtung Lotbefestigung beaufschlagt ist.

9. Anordnung nach Anspruch 6, 7 oder 8,
**dadurch gekennzeichnet, dass**
eine Schlingfeder (7) vorgesehen ist, welche die gewünschte Vorspannkraft erzeugt und gleichzeitig einen leitfähigen Teil der Überbrückung darstellt.

10. Anordnung nach Anspruch 9,
**dadurch gekennzeichnet, dass**
die Schlingfeder (7) zwei Federenden (8 und 9) aufweist, wobei ein erstes Federende (8) am Verdrahtungsträger und ein zweites Federende (9) am Lotformteil (5) oder am Schieber (6) angreift bzw. sich dort abstützt und der Schlingkörper (10) der Schlingfeder (7) an der Vorsicherung (4) fixiert ist und mit dieser in elektrischem Kontakt steht.

## Claims

1. An arrangement for overload protection of overvoltage protection devices, said arrangement comprises at least one voltage-limiting element (H) and at least one voltage-switching element (B) as well as alternatively a series fuse (I), wherein the voltage-limiting element is designed as a varistor (H) and the voltage-switching element is designed as a spark gap (B) and these elements are connected in series, wherein,
to protect the voltage-limiting element (H), a monitoring spark gap or a monitoring gas arrester (A) forming a bypass is connected in parallel in the series connection and a thermal monitoring device (C) is further provided which, upon the effects of aging, in the event of inadmissibly high main system voltages and/or low-energy, periodic, high-frequency overvoltages, bypasses the monitoring spark gap or the monitoring gas arrester (A) and the spark gap (B) as a function of the counter-voltage of the voltage-switching elements, wherein the monitoring device (C) is structurally connected to the spark gap (B) and has a contact (D) which short circuits the series connection of the monitoring spark gap or the monitoring gas arrester (A) and the spark gap (B) as a voltage-switching element (B) during bypassing.

2. The arrangement according to claim 1,
**characterized in that**
the alternatively provided series fuse (I) is connected in series with the voltage-switching element (B) and the voltage-limiting element (H).

3. The arrangement according to claim 2,
**characterized in that**
the series fuse (I) is triggered by the bypassing to protect the structural elements.

4. The arrangement according to claim 1,
**characterized in that**
same is formed on a wiring carrier (1) which accommodates the voltage-limiting (H) as well as the voltage-switching element (B), the alternative series fuse (I), the monitoring spark gap and the monitoring device.

5. The arrangement according to claim 4,
**characterized in that**
the voltage-switching element (B) is designed as a gas arrester (3).

6. The arrangement according to claim 5,
**characterized in that**
the thermal monitoring device is a solder preform (5) disposed in heat-transferring proximity to the gas arrester (3), wherein a spring-loaded clip triggers or effects the monitoring function when released by the melting preform (5).

7. The arrangement according to claim 5,
**characterized in that**
a slider (6) engaging the gas arrester (3) and its solder mounting on the wiring carrier (1) triggers or effects the bypassing function upon the melting of the solder mounting.

8. The arrangement according to claim 7,
**characterized in that**
the slider (6) is preloaded in the direction of the solder mounting.

9. The arrangement according to claim 6, 7 or 8,
**characterized in that**
a wrap spring (7) is provided which produces the desired preload force and simultaneously constitutes a conductive part of the bypass.

10. The arrangement according to claim 9,
**characterized in that**
the wrap spring (7) comprises two spring ends (8 and 9), wherein a first spring end (8) rests against and/or is supported on the wiring carrier and a second spring end (9) on the solder preform (5) or the slider (6) and the wrap body (10) of the wrap spring (7) is fixed on the series fuse (4) and in electrical contact with same.

## Revendications

1. Dispositif de protection anti-surcharge d'appareils de protection anti-surtension, ledit dispositif comprenant au moins un élément limiteur de tension (H) et au moins un élément commutateur de tension (B) ainsi qu'au choix un pré-fusible (1), l'élément limiteur de tension étant réalisé sous forme de varistance (H) et l'élément commutateur de tension étant réalisé sous forme d'éclateur (B) et ces éléments étant branchés en série,
dans lequel
en vue de protéger l'élément limiteur de tension (H), un éclateur de surveillance ou un dérivateur à gaz de surveillance (A) est branché en parallèle dans le circuit en série en formant un by-pass, et de plus il est prévu un moyen de surveillance thermique (C) qui ponte l'éclateur de surveillance ou le dérivateur à gaz de surveillance (A) et l'éclateur (B) en fonction de la contre-tension des éléments commutateurs de tension en cas d'effets de vieillissement, de tension de réseau inadmissiblement élevée et/ou de surtensions à faible énergie, périodiques et à haute fréquence,
le moyen de surveillance (C) est structurellement relié à l'éclateur (B) et dispose d'un contact (D) qui vient court-circuiter le circuit en série de l'éclateur de surveillance ou du dérivateur à gaz de surveillance (A) et de l'éclateur (B) à titre d'élément commutateur de tension (B), lors du pontage.

2. Dispositif selon la revendication 1,
**caractérisé en ce que**
le pré-fusible (1) prévu au choix est branché en série avec l'élément commutateur de tension (B) et avec l'élément limiteur de tension (H).

3. Dispositif selon la revendication 2,
**caractérisé en ce que**
lors du pontage, le pré-fusible (1) est déclenché pour la protection des éléments structurels.

4. Dispositif selon la revendication 1,
**caractérisé en ce que**
celui-ci est réalisé sur un support de câblage (1) qui reçoit l'élément limiteur de tension (H) et l'élément commutateur de tension (B), le pré-fusible (I) prévu au choix, l'éclateur de surveillance et le moyen de surveillance.

5. Dispositif selon la revendication 4,
**caractérisé en ce que**
l'élément commutateur de tension (B) est réalisé sous forme de dérivateur à gaz (3).

6. Dispositif selon la revendication 5,
**caractérisé en ce que**
le moyen de surveillance thermique est une pastille de brasage (5) qui est située dans la zone voisine thermiquement conductrice du dérivateur à gaz (3), et un arceau qui est sollicité par la force d'un ressort et qui est libéré par la pastille (5) en fusion déclenche ou provoque la fonction de pontage.

7. Dispositif selon la revendication 5,
**caractérisé en ce que**
un poussoir (6) attaque le dérivateur à gaz (3) et sa fixation de brasure sur le support de câblage (1), poussoir qui déclenche ou provoque la fonction de pontage lorsque la fixation de brasure fond.

8. Dispositif selon la revendication 7,
**caractérisé en ce que**
le poussoir (6) est sollicité par une force de précontrainte en direction de la fixation de brasure.

9. Dispositif selon la revendication 6, 7 ou 8,
**caractérisé en ce que**
il est prévu un ressort en boucle (7) qui génère la force de précontrainte désirée et qui représente simultanément une partie conductrice du pontage.

10. Dispositif selon la revendication 9,
**caractérisé en ce que**
le ressort en boucle (7) présente deux extrémités (8 et 9), une première extrémité (8) attaquant ou s'appuyant sur le support de câblage et une seconde extrémité (9) attaquant ou s'appuyant sur la pastille de brasage (5) ou sur le poussoir (6), et le corps en boucle (10) du ressort en boucle (7) étant fixé sur le pré-fusible (4) et étant en contact électrique avec celui-ci.
